# EUROPEAN PATENT APPLICATION

(11) **EP 0 706 122 A2**
(43) Date of publication of application: **10.04.1996**
(21) Application number: 95480117.1
(22) Date of filing: 25.08.1995
(51) Int. Cl.: G06F 9/38

(54) **System and method to process multi-cycle operations**

(30) Priority: 30.09.1994 US 315741
(71) Applicant: International Business Machines Corporation, Armonk, N.Y. 10504 (US)
(72) Inventor: Burchfiel, Steven Michael, Austin, Texas 78729 (US); Matheny, David Terrence, Austin, Texas 78759 (US); Taborn, Michael Preston, Austin, Texas 78704 (US)
(74) Representative: Schuffenecker, Thierry

(57) **Abstract**

A processing system and method of operation are provided. Processing is initiated of a first instruction to be processed by processing multiple operations through a multiple stage processing pipeline. After initiating processing of the first instruction, processing is initiated of second and third instructions through the pipeline before finishing processing of the multiple operations.

## Description

### TECHNICAL FIELD

This patent application relates in general to systems for processing information and in particular to a processing system and method of operation.

### BACKGROUND OF THE INVENTION

In previous processing systems, processing of an iterative instruction by an instruction execution unit can extend over a time period of approximately 10-30 machine cycles. This is because the execution unit processes the iterative instruction by sequentially processing multiple operations in order to converge to a result. With typical previous techniques, the execution unit is limited in its ability to process other instructions while the execution unit is processing an iterative instruction. Accordingly, processing of an iterative instruction can substantially decrease overall instruction processing throughput of the execution unit and hence of the processing system.

Thus, a need has arisen for a processing system and method of operation, in which an iterative instruction is processed without substantially decreasing overall instruction processing throughput of the processing system.

### SUMMARY OF THE INVENTION

In a first aspect of a processing system and method of operation, processing is initiated of a first instruction.

The first instruction is to be processed by processing multiple operations through a multiple stage processing pipeline. After initiating processing of the first instruction, processing is initiated of second and third instructions through the pipeline before finishing processing of the multiple operations.

In a second aspect of a processing system and method of operation, processing is initiated of a first iterative instruction. The first iterative instruction is to be processed by processing multiple operations through a multiple stage processing pipeline. After initiating processing of the first iterative instruction, processing is initiated of a second iterative instruction through the pipeline before finishing processing of the multiple operations.

It is a technical advantage of the present invention that an iterative instruction is processed without substantially decreasing overall instruction processing throughput of the processing system.

### BRIEF DESCRIPTION OF THE DRAWINGS

An illustrative embodiment of the present inventions and their advantages are better understood by referring to the following descriptions and accompanying drawings, in which:
FIGURE 1 is a block diagram of a system for processing information according to the preferred embodiment;
FIGURE 2 is a block diagram of a floating point unit of the system of FIGURE 1;
FIGURES 3a-d are conceptual illustrations of a pipeline of the floating point unit of FIGURE 2, operated without an improvement of the preferred embodiment;
FIGURES 4a-c are conceptual illustrations of the pipeline of FIGURES 3a-d, operated with an improvement of the preferred embodiment;
FIGURE 5 is a table of illustrative instructions launched during successive machine cycles of the floating point unit of FIGURE 2; and
FIGURE 6 is a flow chart of a method of operating the floating point unit of FIGURE 2.

### DETAILED DESCRIPTION

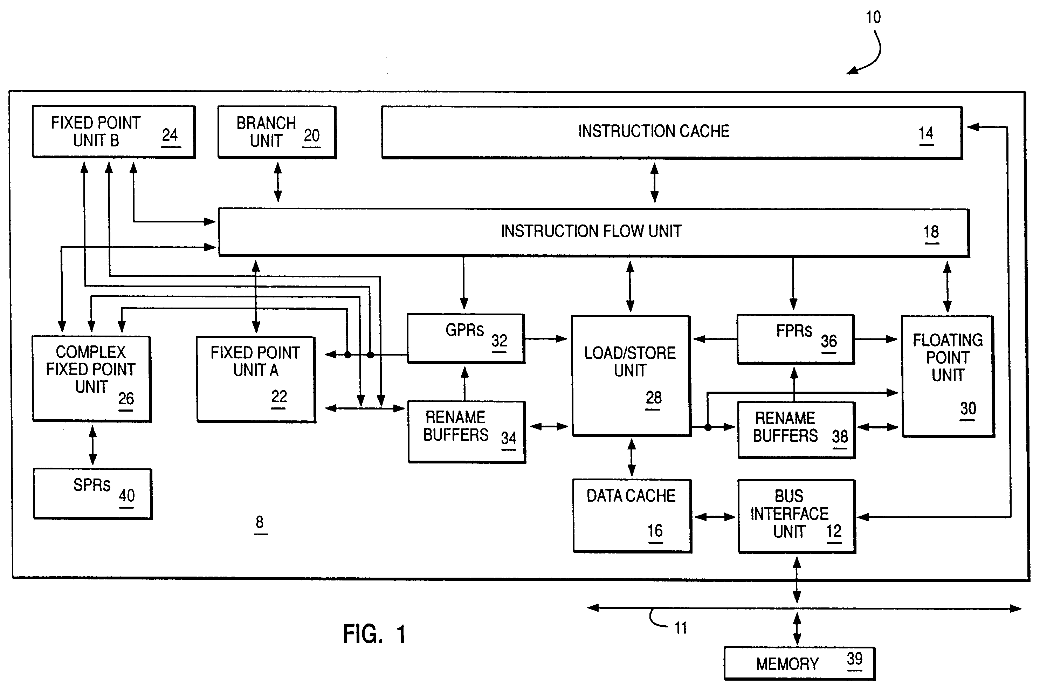

An illustrative embodiment of the present inventions and their advantages are better understood by referring to FIGURES 1-6 of the drawings, like numerals being used for like and corresponding parts of the accompanying drawings.

FIGURE 1 is a block diagram of a system, indicated generally at 10, for processing information according to the preferred embodiment. In the preferred embodiment, a processor 8 of system 10 is a single integrated circuit superscalar microprocessor. Accordingly, as discussed further hereinbelow, system 10 includes various units, registers, buffers, memories, and other sections, all of which are formed by integrated circuitry. Also, in the preferred embodiment, system 10 operates according to reduced instruction set computing ("RISC") techniques. As shown in FIGURE 1, a system bus 11 is connected to a bus interface unit ("BIU") 12 of system 10. BIU 12 controls the transfer of information between processor 8 and system bus 11.

BIU 12 is connected to an instruction cache 14 and to a data cache 16 of system 10. Instruction cache 14 outputs instructions to an instruction flow unit 18. In response to such instructions from instruction cache 14, instruction flow unit 18 selectively outputs instructions to other execution circuitry of system 10.

In addition to instruction flow unit 18, in the preferred embodiment the execution circuitry of system 10 includes multiple execution units, namely a branch unit 20, a fixed point unit A ("FXUA") 22, a fixed point unit B ("FXUB") 24, a complex fixed point unit ("CFXU") 26, a load/store unit ("LSU") 28 and a floating point unit ("FPU") 30. FXUA 22, FXUB 24, CFXU 26 and LSU 28 input their source operand information from general purpose architectural registers ("GPRs") 32 and fixed point rename buffers ("FXRBs") 34. FXUA 22, FXUB 24, CFXU 26 and LSU 28 output results (destination operand information) of their operations for storage at selected entries in fixed point rename buffers 34.

Also, CFXU 26 inputs and outputs source operand information and destination operand information to and from special purpose registers ("SPRs") 40. Moreover, LSU 28 inputs source operand information from floating point architectural registers ("FPRs") 36.

FPU 30 inputs its source operand information from FPRs 36, floating point rename buffers ("FPRBs") 38, and LSU 28. LSU 28 and FPU 30 output results (destination operand information) of their operations for storage at selected entries in floating point rename buffers 38.

In response to a Load instruction, LSU 28 inputs information from data cache 16 and copies such information to selected ones of rename buffers 34 and 38 and FPU 30. If such information is not stored in data cache 16, then data cache 16 inputs (through BIU 12 and system bus 11) such information from a system memory 39 connected to system bus 11. Moreover, data cache 16 is able to output (through BIU 12 and system bus 11) information from data cache 16 to system memory 39 connected to system bus 11. In response to a Store instruction, LSU 28 inputs information from a selected one of GPRs 32 and FPRs 36 and copies such information to data cache 16.

Instruction flow unit 18 outputs information to GPRs 32 and FPRs 36. From instruction flow unit 18, branch unit 20 inputs instructions and signals indicating a present state of system 10. In response to such instructions and signals, branch unit 20 outputs (to instruction flow unit 18) signals indicating suitable memory addresses storing a sequence of instructions for execution by system 10. In response to such signals from branch unit 20, instruction flow unit 18 inputs the indicated sequence of instructions from instruction cache 14. If one or more of the sequence of instructions is not stored in instruction cache 14, then instruction cache 14 inputs (through BIU 12 and system bus 11) such instructions from system memory 39 connected to system bus 11.

In response to the instructions input from instruction cache 14, instruction flow unit 18 selectively dispatches the instructions to selected ones of execution units 20, 22, 24, 26, 28 and 30. Each execution unit executes one or more instructions of a particular class of instructions. For example, FXUA 22 and FXUB 24 execute a first class of fixed point mathematical operations on source operands, such as addition, subtraction, ANDing, ORing and XORing. CFXU 26 executes a second class of fixed point operations on source operands, such as fixed point multiplication and division. FPU 30 executes floating point operations on source operands, such as floating point multiplication and division operations.

As information is stored at a selected one of rename buffers 34, such information is associated with a storage location (e.g. one of GPRs 32) as specified by the instruction for which the selected rename buffer is allocated. Information stored at a selected one of rename buffers 34 is copied to its associated one of GPRs 32 in response to signals from instruction flow unit 18. Instruction flow unit 18 directs such copying of information stored at a selected one of rename buffers 34 in response to "completing" the instruction that generated the information. Such copying is called "writeback". In the preferred embodiment, system 10 includes multiple "writeback" paths between rename buffers 34 and GPRs 32, for transferring information from multiple ones of rename buffers 34 to GPRs 32 during a single cycle of system 10.

As information is stored at a selected one of rename buffers 38, such information is associated with one of FPRs 36. Information stored at a selected one of rename buffers 38 is copied to its associated one of FPRs 36 in response to signals from instruction flow unit 18. Instruction flow unit 18 directs such copying of information stored at a selected one of rename buffers 38 in response to "completing" the instruction that generated the information. In the preferred embodiment, system 10 includes multiple "writeback" paths between rename buffers 38 and FPRs 36, for transferring information from multiple ones of rename buffers 38 to FPRs 36 during a single cycle of system 10.

System 10 achieves high performance by processing multiple instructions simultaneously at various ones of execution units 20, 22, 24, 26, 28 and 30. Accordingly, each instruction is processed as a sequence of stages, each being executable in parallel with stages of other instructions. Such a technique is called "pipelining". In a significant aspect of the preferred embodiment, an instruction is normally processed as six stages, namely fetch, decode, dispatch, execute, completion, and writeback.

In the fetch stage, instruction flow unit 18 selectively inputs (from instructions cache 14) one or more instructions from one or more memory addresses storing the sequence of instructions discussed further hereinabove in connection with branch unit 20 and instruction flow unit 18.

In the decode stage, instruction flow unit 18 decodes up to four fetched instructions.

In the dispatch stage, instruction flow unit 18 selectively dispatches up to four decoded instructions to selected (in response to the decoding in the decode stage) ones of execution units 20, 22, 24, 26, 28 and 30 after reserving a rename buffer entry for each dispatched instruction's result (destination operand information). In the dispatch stage, operand information is supplied to the selected execution units for dispatched instructions. System 10 dispatches instructions in order of their programmed sequence.

In the execute stage, execution units execute their dispatched instructions and output results (destination operand information) of their operations for storage at selected entries in rename buffers 34 and rename buffers 38 as discussed further hereinabove. In this manner, system 10 is able to execute instructions out-of-order relative to their programmed sequence.

In the completion stage, instruction flow unit 18 indicates an instruction is "complete".

In the writeback stage, instruction flow unit 18 directs the copying of information from rename buffers 34 and 38 to GPRs 32 and FPRs 36, respectively. Likewise, in the writeback stage of a particular instruction, system 10 updates its architectural states in response to the particular instruction.

In the preferred embodiment, during each machine cycle of processor 8, processor 8 normally finishes a stage of instruction processing for each instruction being processed. Nevertheless, some instructions (such as an iterative instruction executed by FPU 30) may take more than one machine cycle to finish the execute stage of instruction processing. Examples of iterative instructions are a divide instruction and a square-root instruction. Accordingly, a variable delay may occur between a particular instruction's execution and completion stages in response to the variation in time required for processing of preceding instructions.

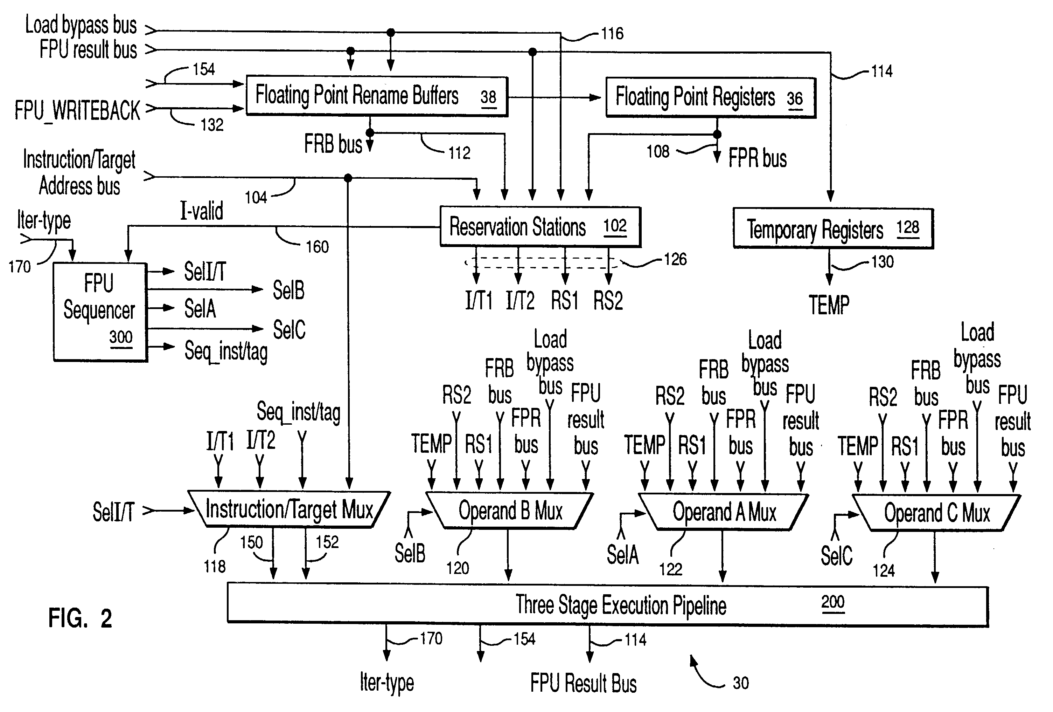

FIGURE 2 is a block diagram of pipelined FPU 30 according to the preferred embodiment. In FIGURE 1 and FIGURE 2, all information paths are shown with a single line, and each such data path transfers multiple bits of information. Likewise, unless otherwise specified, all control signals, registers, multiplexers, and other sections of system 10 operate in response to multiple bits of information.

In the preferred embodiment, FPU 30 includes two reservation stations 102, although more than two can be included in alternative embodiments. In normal operation, each of reservation stations 102 inputs and stores an instruction and its associated rename buffer target addresses (i.e. the addresses of the instruction's assigned buffers in FPRBs 38) and register file target addresses (i.e. the addresses of the instruction's specified registers in FPRs 36) from instruction flow unit 18 (FIGURE 1) through an instruction/target address bus 104. Moreover, reservation stations 102 input and store operands (associated with the instructions stored in reservation stations 102) from any of four operand suppliers, namely:
1. FPRs 36 (through an FPR bus 108);
2. FPRBs 38 (through an FRB bus 112);
3. a three-stage execution pipeline 200 (through an FPU result bus 114); and
4. load/store unit 28 (through a load bypass bus 116).

While instruction flow unit 18 dispatches an instruction, if one or more of the instruction's operands (written by processor 8 into one of reservation stations 102) is not validly available from one of the four operand suppliers, then the instruction has an unresolved dependency on another instruction's result. If aninstruction has such an unresolved dependency, processor 8 resolves the dependency after each unavailable operand later becomes validly available from either the load bypass bus 116 or FPU result bus 114.

At a suitable moment when pipeline 200 is available to process an instruction, FPU sequencer 300 circuitry selects one of reservation stations 102. In response to being selected by processor 8, the selected reservation station outputs ("launches") its stored instruction and associated rename buffer target address and register file target address into execution pipeline 200 through instruction/target multiplexer 118. In connection with launching (i.e. initiating processing/execution of) an instruction, the selected reservation station launches the instruction's associated operand(s) into execution pipeline 200 through the operand multiplexers, namely operand B multiplexer 120, operand A multiplexer 122, and operand C multiplexer 124.

Multiplexers 118, 120, 122 and 124 operate in response to signals on SelI/T, SelB, SelA and SelC lines, respectively, from sequencer 300. Sequencer 300 selectively outputs signals on SelI/T, SelB, SelA and SelC lines in response to signals received by sequencer 300 from reservation stations 102 through I-valid lines 160. Reservation stations 102 output signals on I-valid lines 160 in response to valid instructions being (a) stored in reservation stations 102 and (b) available for launching to pipeline 200. Sequencer 300 further outputs signals on SelI/T, SelB, SelA, and SelC lines in response to iteration-type information received by sequencer 300 from pipeline 200 through an Iter-type bus 170. Sequencer 300 and Iter-type bus 170 are discussed further hereinbelow in connection with FIGURE 2.

Pipeline 200 is the only execution path in FPU 30. Accordingly, each instruction processed by FPU 30 is processed only through pipeline 200 in order to generate and output a result on FPU result bus 114 in response to the instruction. In response to successfully launching an instruction from a reservation station, the reservation station is available to input and store another instruction and its operands. By comparison, if an instruction is not successfully launched from a reservation station during a particular cycle of processor 8, then the reservation station continues to store (1) the instruction, (2)the instruction's associated rename buffer target address, (3) the instruction's associated register file target address, and (4) the instruction's associated operand(s), until a later cycle of processor 8.

An instruction is considered to have launched successfully if all of its necessary operands are valid in the first stage of execution pipeline 200. These operands need not have been stored in the reservation station at the time of launch. This is because multiplexers 120, 122 and 124 are able to multiplex operands from a reservation station bus 126, and also from FPR bus 108, FRB bus 112, FPU result bus 114, load bypass bus 116, and any of six temporary registers 128.

Reservation station bus 126 includes an I/T1 bus for outputting (from the first one of reservation stations 102 to pipeline 200): the reservation station's stored instruction; the instruction's associated rename buffer target address; and the instruction's associated register file target address. Also, reservation station bus 126 includes an RS1 bus for outputting (from the first one of reservation stations 102 to pipeline 200) the instruction's associated operand A, operand B and operand C. Likewise, reservation station bus 126 includes an I/T2 bus for outputting (from the second one of reservation stations 102 to pipeline 200): the reservation station's stored instruction; the instruction's associated rename buffer target address; and the instruction's associated register file target address. Also, reservation station bus 126 includes an RS2 bus for outputting (from the second one of reservation stations 102 to pipeline 200) the instruction's associated operand A, operand B and operand C.

Accordingly, the I/T1 and I/T2 buses (of reservation station bus 126) are multiplexed through multiplexer 118 to pipeline 200, so that multiplexer 118 outputs information to pipeline 200 through buses 150 and 152 from either the I/T1, I/T2, or Seq_inst/tag buses. More particularly, multiplexer 118 outputs instruction information to pipeline 200 through bus 150; also, multiplexer 118 outputs target address information (e.g. information indicating target addresses in one or more of FPRs 36, FPRBs 38 and temporary registers 128) to pipeline 200 through bus 152. Multiplexer 118 outputs such information in response to a signal on SelI/T lines from sequencer 300. The Seq_inst/tag bus is discussed further hereinbelow in connection with sequencer 300. Likewise, the RS1 and RS2 buses (of reservation station bus 126) are multiplexed through multiplexers 120, 122, and 124 to pipeline 200 in response to signals on SelB, SelA and SelC lines from sequencer 300.

In the preferred embodiment, FPU 30 includes temporary registers 128 for storing intermediate results generated during an iterative instruction execution by FPU 30. Accordingly, temporary registers 128 input information from pipeline 200 through FPU result bus 114. Temporary registers 128 output information to pipeline 200 through TEMP bus 130 connected to each of multiplexers 120, 122 and 124.

FPU 30 processes a successfully launched instruction through each stage of pipeline 200. After the instruction is processed through the last stage of pipeline 200, pipeline 200 outputs a result of the instruction on FPU result bus 114. FPU 30 stores the result from FPU result bus 114 into one of FPRBs 38 selected in response to the instruction's associated rename buffer target address (output to FPRBs 38 from pipeline 200 through a bus 154). At a suitable moment, instruction flow unit 18 (FIGURE 1) outputs a signal through an FPU_WRITEBACK line 132 to FPRBs 38. In response to this signal, information is output from one or more of FPRBs 38 to FPRs 36. The output information is then stored in one or more of FPRs 36 selected in response to the instruction's associated register file target address (output to FPRBs 38 from pipeline 200 through bus 154).

FPU 30 processes information in response to several different types of instructions, including the following illustrative types of instructions:
floating point divide ("fdiv")
   a/b;
floating point negate multiply subtract ("fnmsub")
   -(a*c-b);
floating point add ("fadd")
   a+b;
floating point multiply ("fmul")
   a*c;
floating point multiply add ("fmadd")
   a*c+b;
floating point move register ("fmr")
   b -> Fx;
where a = operand A, b = operand B, c = operand C, "/" denotes a divide operation, "*" denotes a multiply operation, "+" denotes an addition operation, "-" denotes either negation or a subtraction operation, "->" denotes a move operation, and "Fx" denotes the xth register of FPRs 36.I n the preferred embodiment, pipeline 200 operates according to the IEEE standard for binary floating point arithmetic STD 754-1985 and includes a fused multiply-add array for performing the arithmetic operation b+a*c.

FPU 30 is able to finish processing any of the fnmsub, fadd, fmul, fmadd, and fmr types of instructions during a single pass through pipeline 200. FPU 30 finishes processing an instruction (which has been dispatched from instruction flow unit 18) when FPU 30 stores the instruction's result from FPU result bus 114 into a selected one of FPRBs 38.

Further, FPU 30 processes information in response to a square-root ("sqrt") type of instruction. The fdiv and sqrt instructions are classified as iterative instructions because FPU 30 finishes processing such an instruction during multiple iterative passes through pipeline 200. In this manner, the hardware circuitry of FPU 30 is streamlined, because dedicated circuitry is not used to execute an iterative instruction (such as the fdiv and sqrt instructions).

In order to control execution of an iterative instruction by FPU 30, sequencer 300 selectively outputs a sequence of instructions and target addresses to pipeline 200 through the Seq_inst/tag bus and multiplexer 118. These target addresses from sequencer 300 include target addresses of assigned ones of temporary registers 128 for storing intermediate results generated during an iterative instruction execution by pipeline 200.

Accordingly, in response to an instruction input from multiplexer 118, pipeline 200 decodes the instruction and outputs information to sequencer 300 through Iter-type bus 170. The information from Iter-type bus 170 indicates to sequencer 300 whether the instruction is an iterative instruction and, if so, the type (e.g. fdiv or sqrt) of iterative instruction. In response to the information from Iter-type bus 170, sequencer 300 selectively outputs a sequence of instructions and target addresses to pipeline 200 through the Seq_inst/tag bus and multiplexer 118, in order to control execution of the iterative instruction by FPU 30. Sequencer 300 further outputs signals on SelB, SelA and SelC lines in order to control multiplexers 120, 122, and 124, respectively, so that suitable operands are output to pipeline 200 during execution of the iterative instruction.

During execution of the iterative instruction, FPU 30 convergently generates a result by executing the sequence of instructions from sequencer 300. FPU 30 executes the sequence of instructions from sequencer 300 by processing the sequence of instructions through pipeline 200. Some of these instructions have data dependencies upon results of earlier instructions in the sequence.

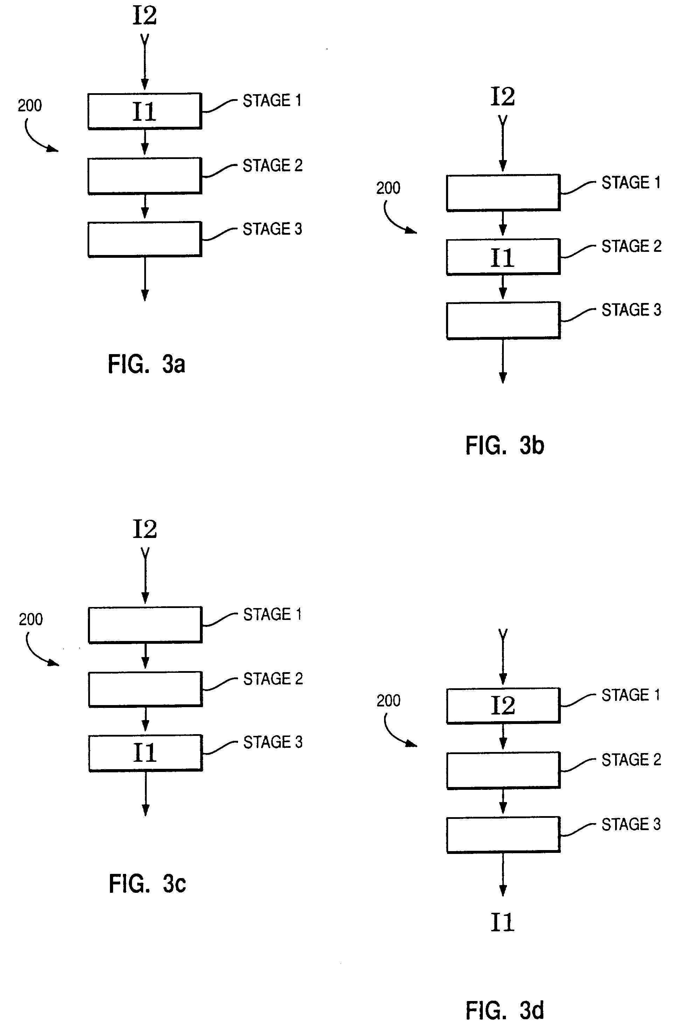

FIGURES 3a-d are conceptual illustrations of pipeline 200 operated without an improvement of the preferred embodiment. As shown in FIGURES 3a-d, pipeline 200 has multiple stages; more particularly, pipeline 200 has 3 stages (Stage 1, Stage 2 and Stage 3) in the preferred embodiment. Referring to FIGURE 3a, during a first machine cycle of FPU 30, an instruction I1 is processed through Stage 1 and is transferred to Stage 2 for further processing (as indicated in FIGURE 3b).

Referring to FIGURE 3b, during a second machine cycle of FPU 30, instruction I1 is processed through Stage 2 and is transferred to Stage 3 for further processing (as indicated in FIGURE 3c). Referring to FIGURE 3c, during a third machine cycle of FPU 30, instruction I1 is processed through Stage 3, and result of instruction I1 is output from pipeline 200 to FPU result bus 114 (as indicated in FIGURE 3d).

Thus, pipeline 200 processes instruction I1 during a total of three machine cycles of FPU 30. In FIGURES 3a-d, an instruction I2 has a data dependency upon the result of preceding (in the sequence of instructions from sequencer 300) instruction I1. As shown in FIGURES 3a-c, instruction I1 is being processed through the multiple stages of pipeline 200. Accordingly, in such a situation, FPU 30 delays processing of instruction I2 through pipeline 200 until the preceding instruction I1's result is available, even if instruction I2 is otherwise ready for processing through pipeline 200.

Accordingly, referring to FIGURES 3a and 3b, even though the preceding instruction I1 has been processed through Stage 1 and is transferred to Stage 2 for further processing, FPU 30 delays processing instruction I2 through Stage 1 until a fourth machine cycle of FPU 30 when the result of preceding instruction I1 is output from pipeline 200 to FPU result bus 114 (as indicated in FIGURE 3d).

Referring to FIGURE 3c, no instruction is being processed through Stage 1 and Stage 2 during the third machine cycle of FPU 30. As such, Stage 1 and Stage 2 are idle during the third machine cycle of FPU 30, because instruction I2 has a data dependency upon the result of preceding instruction I1 which is still being processed through pipeline 200. In this manner, the data dependency results in "bubbles" in Stage 1 and Stage 2 of pipeline 200 during the third machine cycle of FPU 30. This data dependency is resolved after the third machine cycle of FPU 30 when the result of preceding instruction I1 is output from pipeline 200 to FPU result bus 114 (as indicated in FIGURE 3d).

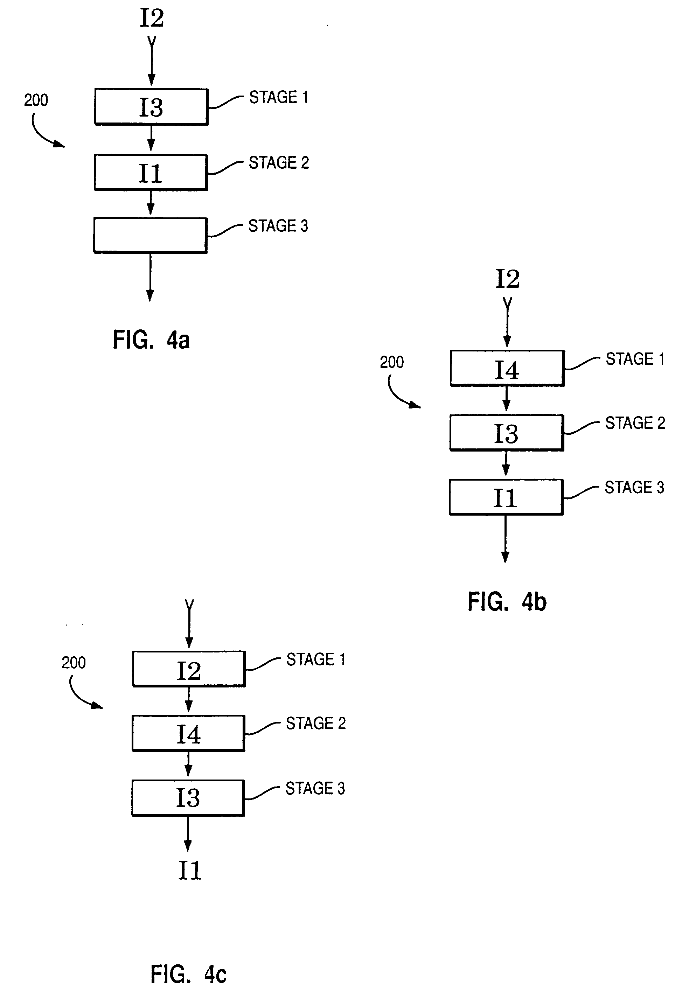

FIGURES 4a-c are conceptual illustrations of pipeline 200 operated with an improvement of the preferred embodiment. Referring to FIGURE 4a, as in FIGURE 3b, during the second machine cycle of FPU 30, instruction I1 is processed through Stage 2 and is transferred to Stage 3 for further processing (as indicated in FIGURE 4b). Nevertheless, unlike FIGURE 3b, in FIGURE 4a during the second machine cycle of FPU 30, an instruction I3 is processed through Stage 1 and is transferred to Stage 2 for further processing (as indicated in FIGURE 4b).

By comparison, in FIGURE 3b, Stage 1 is idle during the second machine cycle of FPU 30, because instruction I2 has a data dependency upon the result of preceding instruction I1 which is still being processed through pipeline 200. Instruction I3 does not have such a data dependency upon the result of preceding instruction I1. Accordingly, sequencer 300 suitably operates multiplexers 118, 120, 122 and 124 (FIGURE 2), so that instruction I3 (together with its associated target addresses and operands) is launched into pipeline 200 for processing through Stage 1 during the second machine cycle of FPU 30.

Referring to FIGURE 4b, as in FIGURE 3c, during the third machine cycle of FPU 30, instruction I1 is processed through Stage 3, and result of instruction I1 is output from pipeline 200 to FPU result bus 114 (as indicated in FIGURE 4c). Nevertheless, unlike FIGURE 3c, in FIGURE 4a during the third machine cycle of FPU 30, instruction I3 is processed through Stage 2 and is transferred to Stage 3 for further processing (as indicated in FIGURE 4c). Moreover, unlike FIGURE 3c, in FIGURE 4a during the third machine cycle of FPU 30, an instruction I4 is processed through Stage 1 and is transferred to Stage 2 for further processing (as indicated in FIGURE 4c).

By comparison, in FIGURE 3c, Stage 1 and Stage 2 are idle during the third machine cycle of FPU 30, because instruction I2 has a data dependency upon the result of preceding instruction I1 which is still being processed through pipeline 200. Instructions I3 and I4 do not have such a data dependency upon the result of a preceding instruction. Accordingly, sequencer 300 suitably operates multiplexers 118, 120, 122 and 124 (FIGURE 2), so that instruction I4 (together with its associated target addresses and operands) is launched into pipeline 200 for processing through Stage 1 during the third machine cycle of FPU 30.

In the example of FIGURES 4a-c, instructions I1 and I2 are output from sequencer 300 to pipeline 200 through the Seq_inst/tag bus and multiplexer 118, in order to control execution of a single iterative instruction by FPU 30. By comparison, in the example of FIGURES 4a-c, instructions I3 and I4 are output to pipeline 200 through one or more of the I/T1 bus (from reservation stations 102), the I/T2 bus (from reservation stations 102), or instruction/target address bus 104. Accordingly, in the example of FIGURES 4a-c, instructions I3 and I4 are not part of the single iterative instruction execution. As such, in the example of FIGURES 4a-c, results of instructions I3 and I4 are output from pipeline 200 through FPU result bus 114 for storage into one of FPRBs 38, prior to a result of the single iterative instruction being output from pipeline 200 through FPU result bus 114 for storage into one of FPRBs 38.

Nevertheless, in an alternative example, instructions I3 and I4 are executed as part of the execution of a different iterative instruction. In such an alternative example, instructions I3 and I4 are output from sequencer 300 to pipeline 200 through the Seq_inst/tag bus and multiplexer 118, in order to control execution of the different iterative instruction by FPU 30. In this alternative example, the single iterative instruction preceded the different iterative instruction in a sequence of instructions dispatched to FPU 30 from instruction flow unit 18. Accordingly, the single iterative instruction was dispatched to FPU 30 from instruction flow unit 18 prior to the different iterative instruction being dispatched to FPU 30 from instruction flow unit 18.

In such an alternative example, a result of the different iterative instruction may or may not be available for storage into one of FPRBs 38, prior to a result of the single iterative instruction being available for storage into one of FPRBs 38. The order in which such results (of the single iterative instruction and of the different iterative instruction) are available for storage into one of FPRBs 38 is dependent upon the exact nature of the two iterative instruction executions. Significantly, FPU 30 accommodates execution of the two iterative instructions and storage of their respective results into FPRBs 38, regardless of the order in which such results are available.

Instructions I3 and I4 are referred to as "interstitial" instructions. This is because instructions I3 and I4 are interstitially launched into pipeline 200 after instruction I1 and before instruction I2. Significantly, instructions I3 and I4 are interstially launched between instructions I1 and I2, even though instructions I1 and I2 are executed as part of the execution of the single iterative instruction. Notably, in the example of FIGURES 4a-c, this single iterative instruction preceded both instructions I3 and I4 in a sequence of instructions dispatched to FPU 30 from instruction flow unit 18. Accordingly, the iterative instruction was dispatched to FPU 30 from instruction flow unit 18 prior to instructions I3 and I4 being dispatched to FPU 30 from instruction flow unit 18.

In this manner, sequencer 300 operates such that an instruction is launched into pipeline 200 during each successive machine cycle of FPU 30, even during machine cycles where one or more "bubbles" would have otherwise resulted in pipeline 200 from iterative instruction execution. Thus, relative to typical previous techniques, FPU 30 achieves higher instruction processing throughput (number of instructions processed per number of machine cycles). The interstitial launching of instructions I3 and I4 does not impact execution of the single iterative instruction, because instructions I3 and I4 are launched into Stage 1 during machine cycles in which Stage 1 is otherwise idle.

In the preferred embodiment, sequencer 300 imposes no restrictions on the types of instructions which can be launched interstitially. An instruction such as instruction I3 can be launched into pipeline 200 and executed, and the result of such an interstitially launched instruction is output from pipeline 200 through FPU result bus 114 for storage into one of FPRBs 38 as described further hereinabove in connection with FIGURE 2. During execution of the single iterative instruction, the number of interstitially launched instructions (and correspondingly the number of results of such interstitially launched instructions output for storage into FPRBs 38) can equal the number of machine cycles in which Stage 1 would otherwise have been idle during execution of the single iterative instruction.

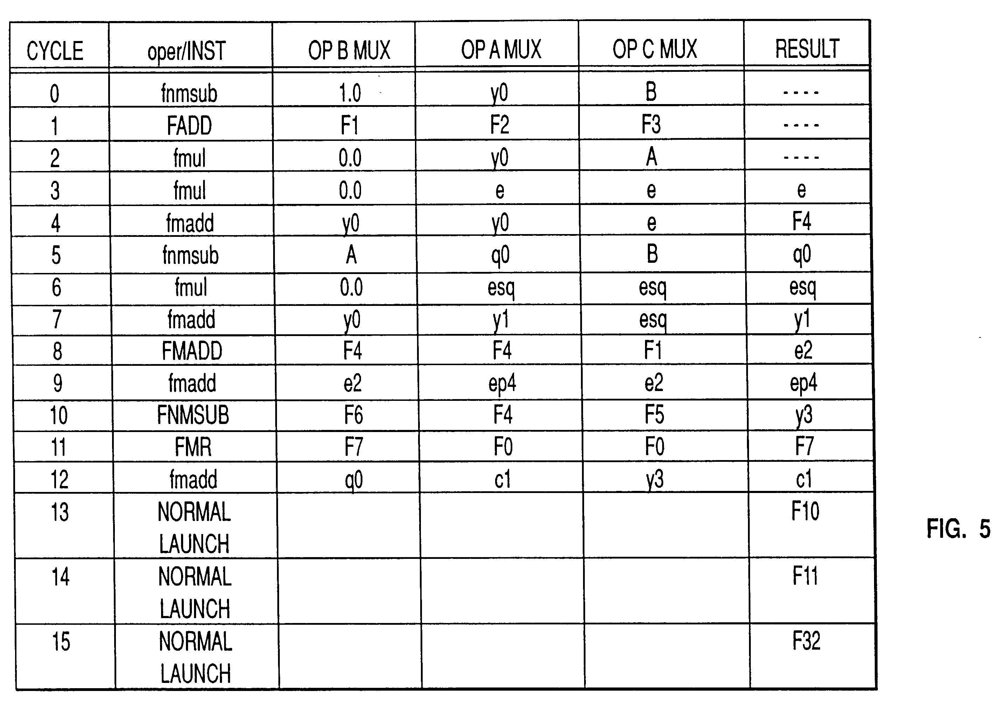

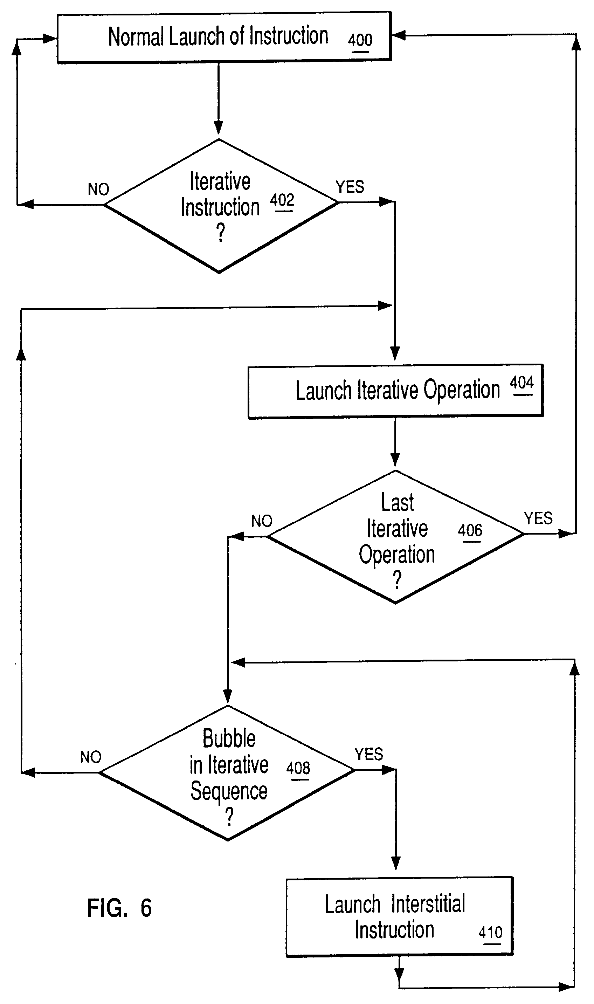

FIGURE 5 is a table of illustrative instructions launched during successive machine cycles of FPU 30. FIGURE 6 is a flow chart of a method of operating FPU 30 according to the embodiment of sequencer 300 discussed further hereinabove in connection with FIGURES 2-4. The table of FIGURE 5 is discussed further hereinbelow with reference to the flow chart of FIGURE 6.

Referring to FIGURE 6, at a step 400, sequencer 300 suitably outputs signals on SelI/T, SelB, SelA and SelC lines in order to normally launch an instruction from reservation stations 102 or from instruction/target address bus 104 into pipeline 200. After step 400, sequencer 300 continues to a decision step 402. At step 402, pipeline 200 outputs information to sequencer 300 through Iter-type bus 170.

The information from Iter-type bus 170 indicates to sequencer 300 whether the instruction is an iterative instruction and, if so, the type (e.g. fdiv or sqrt) of iterative instruction. In response to the information from Iter-type bus 170 indicating the instruction is not an iterative instruction, sequencer 300 returns to step 400. By comparison, in response to the information from Iter-type bus 170 indicating the instruction is an iterative instruction, sequencer 300 continues to a step 404.

At step 404, sequencer 300 selectively outputs one of a sequence of instructions and target addresses to pipeline 200 through the Seq_inst/tag bus and multiplexer 118, in order to control execution of the iterative instruction by FPU 30. In the following discussion, each instruction output from sequencer 300 (as part of an iterative instruction execution) is referred to as an "operation" and is shown in FIGURE 5 in lower-case letters. By comparison, interstially launched instructions are shown in FIGURE 5 in upper-case letters.

Referring also to FIGURE 5, during a machine cycle 0 of FPU 30, sequencer 300 launches an fnmsub operation into pipeline 200 (according to step 404 of FIGURE 6). This fnmsub operation is the first operation launched by sequencer 300 in order to control execution of an FDIV type of iterative instruction by FPU 30. Thus, in the example of FIGURE 5, during a machine cycle immediately preceding cycle 0, information from Iter-type bus 170 indicated to sequencer 300 that the instruction launched (during the machine cycle immediately preceding cycle 0) into Stage 1 of pipeline 200 was an FDIV type of iterative instruction (according to steps 400 and 402 of FIGURE 6).

In connection with the fnmsub operation, multiplexer 120 outputs an operand B = 1.0, multiplexer 122 outputs an operand A = y0 (y0 is a symbol denoting variable operand data) from temporary registers 128, and multiplexer 124 outputs an operand C = one of FPRs 36 specified by operand B of the previously launched FDIV instruction.

Referring again to FIGURE 6, after step 404, sequencer 300 continues to a decision step 406. At step 406, sequencer 300 determines whether the operation launched at step 404 was the last operation of the iterative instruction execution. If the operation launched at step 404 was the last operation, then sequencer 300 returns to step 400. By comparison, if the operation launched at step 404 was not the last operation, then sequencer 300 continues to a decision step 408.

At step 408, sequencer 300 determines whether a "bubble" is present in the iteration sequence, such that Stage 1 is idle (as discussed further hereinabove in connection with FIGURES 3a-d and 4a-c). If a "bubble" is not present, then sequencer 300 returns to step 404. By comparison, if a "bubble" is present, then sequencer 300 continues to a step 410.

At step 410, sequencer 300 suitably outputs signals on SelI/T, SelB, SelA and SelC lines in order to interstitially launch an instruction into pipeline 200, as discussed further hereinabove in connection with FIGURES 2, 3a-d, and 4a-c.

Referring also to FIGURE 5, during a machine cycle 1 of FPU 30, sequencer 300 suitably outputs signals on SelI/T, SelB, SelA and SelC lines in order to interstitially launch an FADD instruction into pipeline 200 (according to step 410 of FIGURE 6). In connection with the FADD instruction, multiplexer 120 outputs an operand B = F1, multiplexer 122 outputs an operand A = F2, and multiplexer 124 outputs an operand C = F3.

Referring again to FIGURE 6, after step 410, sequencer 300 returns to decision step 408.

Since pipeline 200 has three stages, a result of an instruction (or operation) launched ("initiated") during a machine cycle n is output from pipeline 200 through FPU result bus 114 during machine cycle n+3. Accordingly, as shown in FIGURE 5, the result of the FADD instruction (interstitially launched into pipeline 200 during machine cycle 1) is output from pipeline 200 during machine cycle 4 for ultimate storage in F4 of FPRs 36. Likewise, the result of an FMADD instruction (interstitially launched into pipeline 200 during machine cycle 8) is output from pipeline 200 during machine cycle 11 for ultimate storage in F7 of FPRs 36. Moreover, this result of the FMADD instruction is immediately returned into pipeline 200 from FPU result bus 114 through multiplexer 120, such that the FMADD instruction's result is provided as operand B of an FMR instruction interstially launched into pipeline during machine cycle 11.

During machine cycle 12 of FPU 30, sequencer 300 launches an fmadd operation into pipeline 200 (according to step 404 of FIGURE 6). This fmadd operation is the last operation launched by sequencer 300 in order to control execution of the FDIV iterative instruction by FPU 30. Accordingly, during a next machine cycle 13, sequencer 300 suitably outputs signals on SelI/T, SelB, SelA and SelC lines in order to normally launch an instruction from reservation stations 102 or from instruction/target address bus 104 into pipeline 200 (according to steps 406 and 400 of FIGURE 6).

The result of the FDIV iterative instruction (launched during the machine cycle immediately preceding cycle 0) is output from pipeline 200 during machine cycle 15 for ultimate storage in F32 of FPRs 36. Significantly, in response to signals from sequencer 300, four instructions are interstially launched into pipeline 200 during execution processing of the FDIV iterative instruction. More particularly, the FADD instruction is interstitially launched during machine cycle 1, the FMADD instruction is interstitially launched during machine cycle 8, an FNMSUB instruction is interstitially launched during machine cycle 10, and the FMR instruction is interstitially launched during machine cycle 11.

Accordingly, in the example of FIGURE 5, FPU 30 finishes execution of five (5) instructions (i.e. the FDIV iterative instruction and the four interstitially launched instructions) during cycles 0-15. By comparison, without the improvement of the preferred embodiment, FPU 30 would have only finished execution of the FDIV iterative instruction.

Although an illustrative embodiment of the present inventions and their advantages have been described in detail hereinabove, they have been described as example and not as limitation. Various changes, substitutions and alterations can be made in the illustrative embodiment without departing from the breadth, scope and spirit of the present inventions. The breadth, scope and spirit of the present inventions should not be limited by the illustrative embodiment, but should be defined only in accordance with the following claims and equivalents thereof.

## Claims

1. A processing system, comprising:
a multiple stage processing pipeline; and circuitry coupled to said pipeline for:
initiating processing of a first instruction to be processed by processing multiple operations through said pipeline; and
after initiating processing of said firstinstruction, initiating processing of second and third instructions through said pipeline before finishing processing of said multiple operations.

2. The system of Claim 1 wherein said third instruction has a data dependency upon a result of said second instruction.

3. The system of Claim 2 and further comprising at least one rename buffer for storing a result of said second instruction.

4. The system of Claim 1 wherein said second instruction is a first type of instruction, and wherein said third instruction is a second type of instruction.

5. The system of Claim 4 wherein said second instruction is a first type of floating point instruction, and wherein said third instruction is a second type of floating point instruction.

6. The system of Claim 1 wherein said first instruction is an iterative instruction.

7. The system of Claim 1 wherein said second instruction finishes processing before finishing processing of said multiple operations.

8. A processing system, comprising:
a multiple stage processing pipeline; and
circuitry coupled to said pipeline for:
initiating processing of a first iterative instruction to be processed by processing multiple operations through said pipeline; and
after initiating processing of said first iterative instruction, initiating processing of a second iterative instruction through said pipeline before finishing processing of said multiple operations.

9. The system of Claim 8 wherein said first iterative instruction is a first iterative floating point instruction, and wherein said second iterative instruction is a second iterative floating point instruction.

10. The system of Claim 8 wherein said second iterative instruction finishes processing before finishing processing of said multiple operations.
